# EUROPÄISCHE PATENTANMELDUNG

(11) **EP 3 360 410 A1**
(43) Veröffentlichungstag der Anmeldung: **15.08.2018**
(21) Anmeldenummer: 17188803.5
(22) Anmeldetag: 31.08.2017
(51) Int. Cl.: A01K 1/01

(54) **ANORDNUNG EINES MOBILEN, IN EINEM STALL VERFAHRBAREN WERKZEUGTRÄGERS**

(30) Priorität: 10.02.2017 DE 102017001254; 07.06.2017 DE 102017005457
(71) Anmelder: Betebe GmbH, 48691 Vreden (DE)
(72) Erfinder: Die Erfindernennung liegt noch nicht vor
(74) Vertreter: Habbel, Ludwig

(57) **Zusammenfassung**

Bei einer Anordnung eines mobilen, in einem Stall verfahrbaren Werkzeugträgers (1), wobei die Anordnung den Werkzeugträger (1) enthält, welcher mit einem Werkzeug ausgestattet ist, einen auf ein Antriebsorgan (10) einwirkenden elektrischen Fahrmotor (14) aufweist, und einem den Fahrmotor (14) zugeordneten Energiespeicher (12), und wobei die Anordnung eine ortsfest im Stall installierte Führungsstrecke (3) enthält, entlang welcher der Werkzeugträger (1) verfahrbar ist, schlägt die Erfindung vor, dass die Führungsstrecke (3) und das Antriebsorgan (10) des Werkzeugträgers (1) formschlüssig miteinander im Eingriff stehen.

## Beschreibung

Die Erfindung betrifft eine Anordnung eines mobilen Werkzeugträgers, der in einem Stall verfahrbar ist. Gattungsgemäße Anordnungen sind aus der Praxis bekannt. Im Unterschied zu vollständig autonom fahrenden Werkzeugträgern, die beispielsweise auch als "Stallroboter" bezeichnet werden, sind die Werkzeugträger gattungsgemäßer Anordnungen innerhalb des Stalls mithilfe von Führungsstrecken an einen bestimmten Bahnverlauf gebunden, entlang dessen sich der Werkzeugträger bewegt. Beispielsweise ist aus der Praxis eine gattungsgemäße Anordnung unter der Bezeichnung "Miro" bekannt (www.miro.fr), bei dem ein elektromotorisch verfahrbarer Werkzeugträger entlang einer Induktionsschleife verfahrbar ist, die in den Boden eingelassen ist.

Gattungsfremde Anordnungen sind in der Weise bekannt, dass ein bewegliches Element, wie z. B. ein Seil, eine Kette o. dgl. mit einem oder mehreren fest daran montierten Schiebern bzw. Kratzern versehen ist, so dass durch den Umlauf des beweglichen, flexiblen Elements der Schieber bzw. Kratzer zum Zwecke der Stallentmistung, des Futteranschiebens o. dgl. im Stall verfahren werden kann. Die gattungsgemäßen Anordnungen weisen demgegenüber den Vorteil auf, dass nur der eigentliche Werkzeugträger beweglich ist, während die Führungsstrecke ortsfest und unbeweglich im Stall montiert ist, was im Hinblick auf eventuelle Verletzungsgefahren vorteilhaft ist.

Energetisch sind die gattungsgemäßen Werkzeugträger autark, da für den Antrieb ihres Antriebsorgans, beispielsweise Laufräder, ein Elektromotor vorgesehen ist und die Energieversorgung mittels eines Energiespeichers erfolgt, der am Werkzeugträger selbst angeordnet ist. Der Werkzeugträger wird daher automatisch regelmäßig an eine ortsfest im Stall installierte Ladestation angeschlossen, um die Aufladung des Energiespeichers zu ermöglichen. Zu diesem Zweck ist wesentlich, dass die Position des Werkzeugträgers entlang der Führungsstrecke bestimmbar ist, so dass mittels einer im Werkzeugträger vorgesehenen automatischen Steuerung sichergestellt werden kann, dass die im Energiespeicher vorhandene Energie ausreicht, um die Fahrt des Werkzeugträgers bis zur Ladestation zu ermöglichen.

Der Erfindung liegt die Aufgabe zugrunde, eine gattungsgemäße Anordnung dahingehend zu verbessern, dass diese besonders effizient und zuverlässig betrieben werden kann.

Diese Aufgabe wird durch eine Anordnung mit den Merkmalen des Anspruchs 1 gelöst. Vorteilhafte Ausgestaltungen sind in den Unteransprüchen beschrieben.

Die Erfindung schlägt mit anderen Worten vor, den Antrieb des Werkzeugträgers entlang der Führungsstrecke in der Weise auszugestalten, dass ein formschlüssiger Antrieb erfolgt, indem ein am Werkzeugträger vorhandenes Antriebsorgan in einen formschlüssigen Eingriff mit der Führungsstrecke kommt. Durch den Formschluss ist eine exakte Positionsbestimmung des Werkzeugträgers entlang der Führungsstrecke möglich. Durchrutschende, als Antriebsräder dienende Laufräder, wie sie aufgrund eines erhöhten Fahrwiderstandes (Hindernis) oder aufgrund besonders rutschiger Bodenverhältnisse ansonsten nicht auszuschließen sind, können die Positionsbestimmung des Werkzeugträgers im Stall erschweren bzw. ungenau machen, oder erfordern einen erheblichen zusätzlichen technischen und wirtschaftlichen Aufwand, um mit Hilfe zusätzlicher technischer Einrichtungen unabhängig von der Drehung des Antriebsrades eine korrekte Positionsbestimmung innerhalb des Stalls zu ermöglichen.

Vorschlagsgemäß hingegen kann allein aufgrund der Bewegung des Antriebsorgans, nämlich aufgrund des Formschlusses mit der Führungsstrecke, die Position des Werkzeugträgers exakt bestimmt werden. Somit kann die Steuerung der Bewegungen des Werkzeugträgers präzise durchgeführt werden und sichergestellt werden, dass der Werkzeugträger mit ausreichender Energiereserve, aber gleichzeitig auch unter optimaler Ausnutzung des Energiegehalts des Energiespeichers seine Strecken zurücklegt und rechtzeitig zur Ladestation zurückkehrt, so dass Eingriffe durch das Personal nicht erforderlich werden und der Werkzeugträger vielmehr möglichst autonom die vorgesehenen Arbeiten durchführen kann.

Es kann vorgesehen sein, den teilweise entleerten Energiespeicher des Werkzeugträgers an einer ortsfest im Stall angeordneten Ladestation aufzuladen, wie dies aus dem eingangs genannten Stand der Technik bekannt ist. Als eine erste Alternative kann vorgesehen sein, den teilweise entleerten Energiespeicher von dem Werkzeugträger zu entfernen und durch einen vollen Energiespeicher zu ersetzen, wie dies unter dem Begriff des "Wechselakkus" bekannt ist. Als eine zweite Alternative kann vorgesehen sein, den teilweise entleerten Energiespeicher von dem Werkzeugträger zu entfernen und an einer Ladestation aufzuladen, die nicht notwendigerweise ortsfest im Stall montiert sein muss.

Der Werkzeugträger kann dazu genutzt werden, mittels eines Schiebers Futter an bzw. in eine Futterrinne der Tiere zu schieben, oder mittels eines Schiebers bzw. einer Bürste den Stallboden mechanisch zu reinigen. Falls der Werkzeugträger mit einem entsprechenden Vorratsbehälter ausgestattet ist, kann er dazu genutzt werden, Materialien im Stall zu verteilen, z.B. Einstreu, Kalk, Sägemehl oder dergleichen.

In einer ersten Ausgestaltung kann vorgesehen sein, dass die Führungsstrecke als Kette ausgestaltet ist, beispielsweise als Gliederkette oder Rollenkette, so dass dementsprechend das Antriebsorgan des Werkzeugträgers dazu passend als Nusskettenrad bzw. als Zahnrad ausgestaltet sein kann. Die Ausgestaltung als Kette ist beispielsweise dann vorteilhaft, wenn ein Stall bzw. der Boden innerhalb eines Stalls neu errichtet wird. Es kann nämlich dann, ohne nachträgliche Eingriffe in einen bereits vorhandenen Stall zu erfordern, eine Nut im Stallboden vorgesehen sein, in welcher die Kette verläuft, so dass die Kette gegen Auslenkungen in Querrichtung gesichert ist und somit vor Beschädigungen geschützt ist. Besonders vorteilhaft kann in solchen Fällen vorgesehen sein, dass die Kette innerhalb einer Profilschiene angeordnet ist, die in den Boden eingelassen und nach oben offen ist. Die Profilschiene schützt den beispielsweise aus Beton bestehenden Boden vor mechanischen Beschädigungen und vereinfacht insbesondere die Erstellung der vorschlagsgemäßen Anordnung, da beim Gießen des Betonbodens die zur Aufnahme der Kette vorgesehene Fuge durch die vom Beton umgossene Profilschiene geschaffen wird.

Grundsätzlich kann jedoch auch vorgesehen sein, eine als Kette ausgestaltete Führungsstrecke auch nachträglich in einem Stall oberhalb des Stallbodens zu installieren, wobei in diesen Fällen dann die Kette gegen seitliche Auslenkungen kaum geschützt ist und eine Stolperfalle darstellen kann, oder wobei im Rahmen einer derartigen nachträglichen Installation eine die Kette führende Profilschiene auf dem Stallboden aufbauend montiert wird.

Eine Alternative, ebenfalls für bestimmte Anwendungsfälle vorteilhafte Ausgestaltung der Führungsstrecke kann darin bestehen, dass die Führungsstrecke als Schiene ausgestaltet ist, beispielsweise als Zahnstange oder als Lochschiene o. dgl., jeweils mit einem passend dazu als Zahnrad ausgestalteten Antriebsorgan des Werkzeugträgers. Die Montage einer solchen Schiene ist in bestehenden Stallgebäuden vorteilhaft, da keine Einschnitte in den Boden eingebracht werden müssen und die Schiene im Unterschied zu einem flexiblen Element, wie z. B. einer Kette, einem Seil o. dgl. eine ausreichende Formstabilität aufweisen kann, um auf die Schiene einwirkende Querkräfte aufnehmen zu können, ohne dabei unzulässig verformt zu werden. Beispielsweise kann eine solche Schiene aus Stahl bestehen und eine Breite von etwa 100 mm aufweisen, so dass sie dementsprechend stabil ist. Die Höhe eines solchen Schienenprofils richtet sich nach dem gewünschten Formschluss. Als besonders vorteilhaft kann dabei die Ausgestaltung der Schiene als Lochschiene vorgesehen sein: In diesem Fall sind im Unterschied zu Zahnschienen bzw. Zahnstangen keine Vorsprünge erforderlich, die über die Außenkontur der übrigen Schiene hinausragen und eine Verletzungsgefahr darstellen können. Vielmehr kann beispielsweise ein flaches Stahlprofil von ca. 6 x 100 mm Querschnitt verwendet werden, in dessen Löcher die Zähne eines entsprechenden Antriebs-Zahnrades des Werkstückträgers eingreifen.

Überraschend hat sich in ersten praktischen Versuchen herausgestellt, dass der im Stall vorhanden Dung für den formschlüssigen Antrieb des Werkzeugträgers kein Hindernis darstellt, sondern ganz im Gegenteil sogar förderlich ist: Im Vergleich dazu, den Werkzeugträger zunächst mehrere Male "trocken" laufen zu lassen, reduzierte sich die erforderliche Antriebsleistung, gemessen anhand der Stromaufnahme des elektrischen Antriebsmotors, da offensichtlich der Dung als Schmiermittel wirkte. Der Einfluss, der bei gattungsgemäßen Anordnungen für Schlupf sorgt und somit nachteilig ist, erwies sich daher für die vorschlagsgemäß ausgestaltete Anordnung sogar nicht nur als nicht hinderlich, sondern als vorteilhaft und förderlich.

Vorteilhaft kann sichergestellt werden, dass im Stall befindlicher Dung den Formschluss zwischen Werkzeugträger und Führungsstrecke nicht behindert, indem die Führungsstrecke dort, wo sie vom Werkzeugträger befahren wird, angehoben wird. Auf diese Weise ist sichergestellt, dass ausreichend Freiraum um die Führungsstrecke herum gegeben ist, beispielsweise unterhalb der Führungsstrecke, so dass festere Bestandteile des Dungs zerquetscht und aus dem Weg gedrückt werden können, so dass der gewünschte Formschluss zwischen Antriebsorgan und Führungsstrecke sichergestellt werden kann. Zu diesem Zweck ist vorteilhaft vorgesehen, dass die Führungsstrecke geradlinig verläuft und an ihren beiden Enden ortsfest gehalten ist. Zwischen diesen beiden Enden kann sie jedoch vom Untergrund abgehoben werden. Der Werkzeugträger weist hierzu einen Heber auf, welcher die Führungsstrecke untergreift. Dabei ist der Heber in der Weise angeordnet und ausgestaltet, dass er mit dem Antriebsorgan zusammenwirkt bzw. dem Antriebsorgan zugeordnet ist, so dass die durch den Heber angehobene Führungsstrecke dem Antriebsorgan formschlüssig anliegen kann.

Unabhängig davon, ob die Führungsstrecke vom Untergrund abgehoben wird oder nicht, kann sie vorteilhaft geradlinig verlaufend im Stall installiert sein und an ihren beiden Enden eingespannt sein, so dass sie unter einer Zugspannung gehalten ist. In ersten praktischen Versuchen haben sich Zugspannungen von mehr als 1 t als vorteilhaft herausgestellt, beispielsweise bei einer Lochschiene aus Stahl mit Querschnittsabmessungen von 100 x 6 mm eine Zugkraft von 2 t. Durch diese Zugkraft ist eine für den praktischen Betrieb stabile Montage der Führungsstrecke am Stallboden gewährleistet, ohne dass in den Stallboden weitere zusätzliche Befestigungselemente eingebracht werden müssten, beispielsweise Dübel o. dgl. Insbesondere wenn ohnehin vorgesehen ist, die Führungsstrecke zwischen den beiden Enden anzuheben, kann durch die Vorspannung der Führungsstrecke deren stabile Montage gewährleistet werden und auf zusätzliche Elemente, welche die Führungsstrecke am Boden festlegen würden, verzichtet werden.

Vorteilhaft kann der Werkzeugträger in an sich bekannter Weise mit einem Schieber zur Stallentmistung ausgestaltet sein.

Vorteilhaft kann der Werkzeugträger mit einer Sprüheinrichtung versehen sein, der ein ebenfalls am Werkzeugträger installierter Tank zugeordnet ist, so dass die im Tank gespeicherte Flüssigkeit versprüht werden kann. So kann der Werkzeugträger beispielsweise zur Reinigung oder Desinfektion des Stalls genutzt werden. Dabei kann die Flüssigkeit in nahezu beliebiger Richtung versprüht werden, oder in Fahrtrichtung hinter den Werkzeugträger auf den zuvor vom Werkzeugträger mechanisch gereinigten Stallboden. Die zu versprühende Flüssigkeit kann auch zur Pflege der im Stall befindlichen Tiere genutzt werden. Beispielsweise kann bei entsprechenden klimatischen Bedingungen, wenn im Stall für die Tiere unangenehm hohe Temperaturen herrschen, Wasser fein zerstäubt werden, so dass die Verdunstungskühle eine Klimatisierung des Stalls bewirkt. Durch das Versprühen von geeigneter Flüssigkeit - beispielsweise Wasser - auf im Stall befindlichen Dung kann zudem ggf. die Emission von Ammoniakgasen reduziert werden, was nicht nur für das Wohlbefinden der Tiere vorteilhaft ist, sondern auch die Einhaltung ökologischer Grenzwerte - z.B. der Luftbelastung - unterstützt.

In einer Ausgestaltung kann die Sprüheinrichtung nach vorn ausgerichtet sein, so dass die Sprühstrahlen in Fahrtrichtung vor den Werkzeugträger auf den Stallboden bzw. den dort vorhandenen Dung gerichtet sind. Dadurch können ggf. die Fahreigenschaften des Werkzeugträgers positiv beeinflusst werden. Es hat sich in praktischen Versuchen nämlich überraschend herausgestellt, dass dort, wo der auf dem Stallboden vorhandene Dung als vorteilhaft angesehene Schmierungseigenschaften aufweist, durch das Versprühen von Wasser die Zähigkeit des Schmierfilms verringert werden kann, so dass unter Beibehaltung der an sich vorteilhaften Schmierungseigenschaften die Leichtgängigkeit des Antriebs auch bereits durch geringe Wasserzugaben verbessert werden konnte und der Werkzeugträger mit einer reduzierten Stromaufnahme des Elektromotors verfahren werden konnte.

Vorteilhaft kann der Werkzeugträger mit einem Sensor zur Luftgütemessung ausgestattet sein, so dass beispielsweise die erwähnten Ammoniakgase automatisch detektiert werden können. Anhand der Luftgütemessung kann beispielsweise automatisch gesteuert werden, wie häufig die Fahrten eines Werkzeugträgers zur Stallentmistung durchgeführt werden sollen, oder es können automatisch Maßnahmen ergriffen werden, um die auftretende Ammoniakbelastung zu reduzieren, wie beispielsweise das oben erwähnte Versprühen von bestimmten Substanzen, wie dem beispielsweise oben erwähnten Wasser.

Vorteilhaft kann der Werkzeugträger mit einem Sensor ausgestattet sein, der vor dem Werkzeugträger befindliche Hindernisse erfasst. Ein solcher Sensor kann insbesondere zur Erfassung von Lebewesen ausgestaltet sein, so dass beispielsweise im Weg des Werkzeugträgers stehende oder liegende Tiere sensorisch detektiert werden. Auf diese Weise kann beispielsweise automatisch die Fahrgeschwindigkeit des Werkzeugträgers angepasst werden, beispielsweise reduziert werden, so dass die Tiere mit sanftem Druck auf die Anwesenheit des Werkzeugträgers aufmerksam gemacht werden können, andererseits jedoch Verletzungen durch einen zu schnell fahrenden Werkzeugträger zuverlässig vermieden werden können. Befinden sich jedoch keine Hindernisse im Weg des Werkzeugträgers, kann ggf. die Fahrgeschwindigkeit des Werkzeugträgers dementsprechend erhöht werden, um mehr Fahrten innerhalb eines bestimmten Zeitraums zu ermöglichen.

In einer ersten Ausgestaltung der Anordnung kann vorgesehen sein, dass diese innerhalb eines Rinderstalls angeordnet ist. Alternativ dazu kann vorgesehen sein, dass eine vorschlagsgemäße Anordnung auch innerhalb eines Schweinestalls angeordnet sein kann und dort unterhalb eines Spaltenbodens. Falls in diesem Fall der Werkzeugträger zur Entmistung dient und mit einem entsprechenden Schieber versehen ist, können die Fahrten des Werkzeugträgers problemlos auch dort durchgeführt werden, wo sich Schweine aufhalten, da der Werkzeugträger unterhalb des Spaltenbodens verfahren wird, auf welchem sich die Schweine befinden.

Ein Ausführungsbeispiel einer vorschlagsgemäßen Anordnung wird anhand der rein schematischen Darstellungen nachfolgend näher erläutert. Dabei zeigt
- Fig. 1: eine perspektivische Ansicht auf einen Werkzeugträger, der einen Schieber als Werkzeug trägt,
- Fig. 2: eine Anordnung, welche den Werkzeugträger von Fig. 1 und eine Führungsstrecke aufweist, und
- Fig. 3: eine Ansicht auf die Unterseite des Werkzeugträgers.

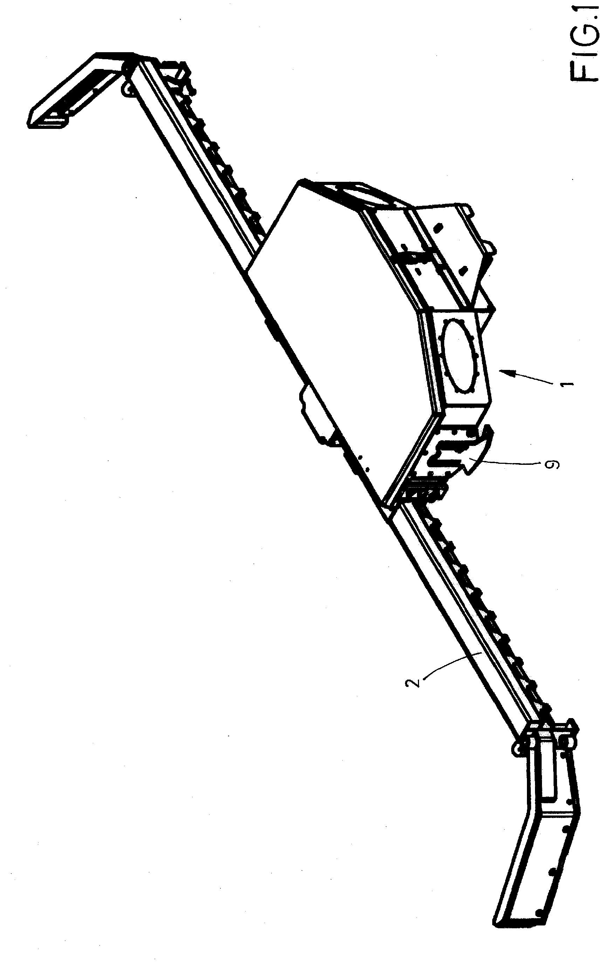

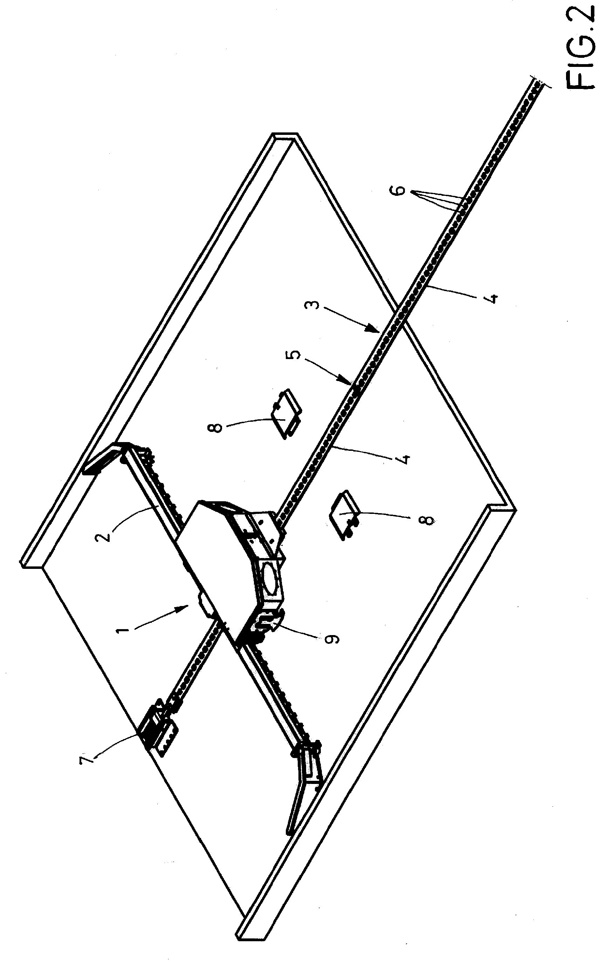

In den Zeichnungen ist jeweils mit 1 ein Werkzeugträger bezeichnet, wobei dieser Werkzeugträger in den beiden Fig. 1 und 2 mit einem Schieber 2 bestückt ist und in dieser Ausgestaltung zum Verlagern von Mist in einem Stall dient.

Aus Fig. 2 ist ersichtlich, dass der Werkzeugträger 1 entlang einer Führungsstrecke 3 beweglich ist, die aus mehreren Abschnitten 4 zusammengesetzt ist, wobei diese Abschnitte 4 an entsprechenden Nahtstellen 5 miteinander verbunden sind, beispielsweise miteinander verschweißt sind. Die Führungsstrecke 3 ist als Lochschiene ausgestaltet und besteht aus einem stählernen Rechteckprofil mit Abmessungen von 100 x 6 mm, welches in regelmäßigen Abständen Löcher 6 aufweist, die das Rechteckprofil in aufrechter Richtung durchsetzen. In Fig. 2 ist weiterhin eine Spannvorrichtung 7 dargestellt, welche bei dem dargestellten Ausführungsbeispiel die Führungsstrecke 3 mit einer Spannkraft von 2t spannt.

Schließlich sind in Fig. 2 auch zwei Ladekontakte 8 dargestellt. Der Werkzeugträger 1 weist dazu komplementäre Ladeanschlüsse 9 auf, so dass der Werkzeugträger 1 entlang der Führungsstrecke 3 bis auf die Ladekontakte 8 verfahren und dort angehalten werden kann, wobei die Ladeanschlüsse 9 in Kontakt mit den Ladekontakten 8 geraten, so dass ein elektrischer Energiespeicher des Werkzeugträgers 1 geladen werden kann.

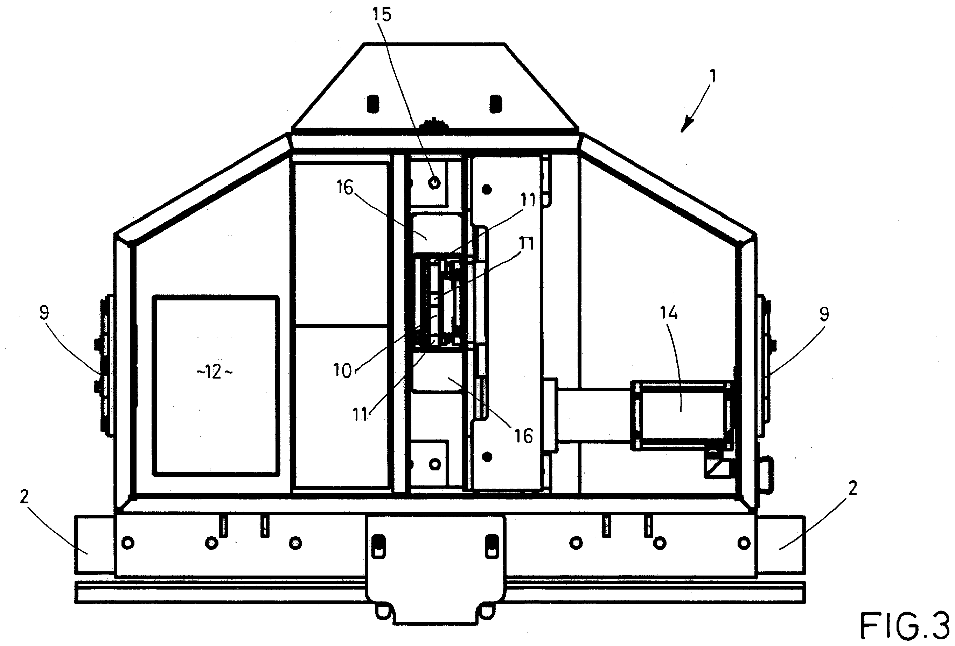

Fig. 3 zeigt die Unterseite des Werkzeugträgers 1 mit lediglich abschnittsweise dargestelltem Schieber 2. Ein Antriebsorgan 10 ist in Art eines Zahnrads ausgestaltet und greift mit Zähnen 11 formschlüssig in die Löcher 6 der Führungsstrecke 3. Eine elektronische Steuerung 12 ist in einem separaten Gehäuse geschützt untergebracht. Ein Fahrmotor 14 treibt über ein Getriebe das Antriebsorgan 10 an. Magnetsensoren 15 dienen zum Referenzieren nach einem Neustart des Werkzeugträgers 1 bzw. von dessen elektronischer Steuerung 12.

Vor und hinter dem Antriebsorgan 10 ist jeweils ein Heber 16 in Form einer Blechplatte angeordnet, welche sich unter die Führungsstrecke 3 erstreckt. Bei der Installation des Werkzeugträgers 1 wird dieser also regelrecht auf einen Abschnitt 4 der Führungsstrecke 3 aufgefädelt. Die Führungsstrecke 3 liegt über den größten Teil ihrer Länge auf dem Stallboden auf. Durch die beiden Heber 16 wird sie dort, wo sich der Werkzeugträger 1 befindet, geringfügig vom Stallboden angehoben, so dass das Antriebsorgan 10 optimal in die Löcher 6 der Lochschiene eingreifen kann. Verschmutzungen, die sich auf oder in den Löchern 6 befinden, werden durch die Zähne 11 des Antriebsorgans 10 durch die Löcher 6 hindurch in den Freiraum unterhalb der angehobenen Lochschiene gedrückt, so dass ein optimaler Formschluss zwischen dem Antriebsorgan 10 und der Führungsstrecke 3 gewährleistet ist.

### Bezugszeichen:

- 1: Werkzeugträger
- 2: Schieber
- 3: Führungsstrecke
- 4: Abschnitt
- 5: Nahtstelle
- 6: Loch
- 7: Spannvorrichtung
- 8: Ladekontakt
- 9: Ladeanschluss
- 10: Antriebsorgan
- 11: Zahn
- 12: Steuerung
- 13:
- 14: Fahrmotor
- 15: Magnetsensor
- 16: Heber

## Patentansprüche

1. Anordnung eines mobilen, in einem Stall verfahrbaren Werkzeugträgers (1),
• wobei die Anordnung den Werkzeugträger (1) enthält,
- welcher mit einem Werkzeug ausgestattet ist,
- einen auf ein Antriebsorgan (10) einwirkenden elektrischen Fahrmotor (14) aufweist,
- und einem den Fahrmotor (14) zugeordneten Energiespeicher (12),
• und wobei die Anordnung eine ortsfest im Stall installierte Führungsstrecke (3) enthält, entlang welcher der Werkzeugträger (1) verfahrbar ist,
**dadurch gekennzeichnet,**
**dass** die Führungsstrecke (3) und das Antriebsorgan (10) des Werkzeugträgers (1) formschlüssig miteinander im Eingriff stehen.

2. Anordnung nach Anspruch 1,
**dadurch gekennzeichnet,**
**dass** die Führungsstrecke (3) als Kette ausgestaltet ist.

3. Anordnung nach Anspruch 2,
**dadurch gekennzeichnet,**
**dass** die Kette innerhalb einer in den Boden eingelassenen, nach oben offenen Profilschiene angeordnet ist.

4. Anordnung nach Anspruch 1,
**dadurch gekennzeichnet,**
**dass** die Führungsstrecke (3) als Schiene ausgestaltet ist.

5. Anordnung nach einem der vorhergehenden Ansprüche,
**dadurch gekennzeichnet,**
**dass** die Führungsstrecke (3) geradlinig verläuft und an ihren beiden Enden ortsfest gehalten ist,
und **dass** der Werkzeugträger (1) einen die Führungsstrecke (3) untergreifenden Heber (16) aufweist, welcher dem Antriebsorgan (10) in der Art zugeordnet ist, dass das Antriebsorgan (10) auf die Führungsstrecke (3) dort formschlüssig einwirkt, wo die Führungsstrecke (3) vom Untergrund angehoben ist.

6. Anordnung nach einem der vorhergehenden Ansprüche,
**dadurch gekennzeichnet,**
**dass** die Führungsstrecke (3) geradlinig verläuft und an ihren beiden Enden eingespannt ist, derart, dass sie unter Zugspannung gehalten ist.

7. Anordnung nach einem der vorhergehenden Ansprüche,
**dadurch gekennzeichnet,**
**dass** der Werkzeugträger (1) mit einem Schieber (2) zur Stallentmistung ausgestattet ist.

8. Anordnung nach einem der vorhergehenden Ansprüche,
**dadurch gekennzeichnet,**
**dass** der Werkzeugträger (1) mit einem Tank und einer Sprüheinrichtung zum Versprühen von in dem Tank gespeicherter Flüssigkeit ausgestattet ist.

9. Anordnung nach Anspruch 8,
**dadurch gekennzeichnet,**
**dass** die Sprüheinrichtung derart ausgerichtet ist, dass die Sprühstrahlen in Fahrtrichtung vor den Werkzeugträger (1) gerichtet sind.

10. Anordnung nach einem der vorhergehenden Ansprüche,
**dadurch gekennzeichnet,**
**dass** der Werkzeugträger (1) mit einem Sensor zur Luftgütemessung ausgestattet ist.

11. Anordnung nach einem der vorhergehenden Ansprüche,
**dadurch gekennzeichnet,**
**dass** der Werkzeugträger (1) mit einem Sensor zur Erfassung von vor dem Werkzeugträger (1) befindlichen Hindernissen ausgestattet ist.

12. Anordnung nach Anspruch 11,
**dadurch gekennzeichnet,**
**dass** der Sensor zur Erfassung von Lebewesen ausgestattet ist.

13. Anordnung nach einem der vorhergehenden Ansprüche,
**dadurch gekennzeichnet,**
**dass** die Anordnung innerhalb eines Rinderstalls angeordnet ist.

14. Anordnung nach einem der Ansprüche 1 bis 12,
**dadurch gekennzeichnet,**
**dass** die Anordnung innerhalb eines Schweinestalls unterhalb eines Spaltenbodens angeordnet ist.
